(19) Europäisches Patentamt
European Patent Office
Office européen des brevets

(11) Numéro de publication : **0 314 551 B1**

# (12) FASCICULE DE BREVET EUROPEEN

(45) Date de publication du fascicule du brevet : **22.01.92 Bulletin 92/04**

(51) Int. Cl.$^5$ : **C09K 5/04**

(21) Numéro de dépôt : **88402661.8**

(22) Date de dépôt : **21.10.88**

## (54) Compositions à base d'éther chlorofluore et de solvant.

(30) Priorité : **30.10.87 FR 8715095**

(43) Date de publication de la demande : **03.05.89 Bulletin 89/18**

(45) Mention de la délivrance du brevet : **22.01.92 Bulletin 92/04**

(84) Etats contractants désignés : **AT BE CH DE FR GB IT LI LU NL SE**

(56) Documents cités :
**EP-A- 0 143 509**
**DE-A- 3 202 377**

(73) Titulaire : **ATOCHEM**
**4 & 8, Cours Michelet La Défense 10**
**F-92800 Puteaux (FR)**

(72) Inventeur : **Bertocchio, René**
**49bis, rue des Vallières**
**F-69390 Vourles par Vernaison (FR)**

(74) Mandataire : **Leboulenger, Jean et al**
**ATOCHEM Département Propriété Industrielle**
**F-92091 Paris la Défense 10 Cédex 42 (FR)**



Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des compositions de solvants et d'éthers chlorofluorés, utilisables par exemple dans les appareils de chauffage ou de refroidissement par absorption.

Dans ces appareils, les couples de fluide de travail et de solvant choisis doivent répondre à un certain nombre de critères liés au fonctionnement même de ce type de machine :

a/ Les deux composés doivent être complètement miscibles dans les proportions d'emploi sur un grand domaine de températures.

b/ Le solvant doit rester liquide à basse température et présenter un point de solidification aussi bas que possible afin de pouvoir utiliser les sources froides naturelles, comme l'air ambiant ou les eaux souterraines.

c/ Les points d'ébullition sous pression normale doivent de préférence présenter un écart d'au moins 100°C afin d'éviter l'emploi d'un dispositif de rétrogradation du solvant.

d/ Le point d'ébullition du fluide de travail ne doit être ni trop bas pour éviter l'emploi de pressions de service importantes, ni trop haut pour respecter la condition précédente.

e/ Le mélange doit présenter une excellente stabilité thermique et chimique dans le domaine de température impliqué par le cycle thermodynamique.

f/ Les produits choisis ne doivent enfin présenter aucun caractère de toxicité.

Pour des raisons de sécurité et également pour tenir compte de leur bonne stabilité thermique et chimique, la plupart des fluides de travail sont choisis parmi les hydrocarbures fluorés et, plus spécialement, parmi les hydrocarbures chlorofluorés à un ou deux atomes de carbone qui correspondent le mieux aux critères de volatibilité et de solubilité définis plus haut. Les composés les plus utilisés sont le dichlorodifluorométhane (R 12), le dichlorofluorométhane (R 21), le chlorodifluorométhane (R 22), le chlorofluorométhane (R 31), le dichloro-1,2 tétrafluoro-1,1,2,2 éthane (R 114), le dichloro-1,1 tétrafluoro-1,2,2,2 éthane (R 114a), le chloropentafluoroéthane (R 115), le dichloro-1,1 trifluoro-2,2,2 éthane R 123), le dichloro-1,2 trifluoro-1,2,2 éthane (R 123a), le dichloro-1,1 trifluoro-1, 2,2 éthane (R 123b), le chloro-1 tétrafluoro-1,2,2,2 éthane (R 124), le chloro-1 tétrafluoro-1,1,2,2 éthane (R 124a), le chloro-1 trifluoro-1,2,2 éthane (R 133), le chloro-1 trifluoro-2,2,2 éthane (R 133a), le chloro-1 trifluoro-1,1,2 éthane (R 133b) et le chloro-1 difluoro-1,1 éthane (R 142b).

On peut également faire appel à des composés fluorés n'entrant pas dans la classe des hydrocarbures chlorofluorés à 1 ou 2 atomes de carbone. Il en est ainsi dans le brevet EP 0143509 qui préconise l'emploi, comme fluides de travail, d'hydrocarbures et d'éthers fluorés acycliques (linéaires ou ramifiés) ou cycliques renfermant de 3 à 5 atomes de carbone et dont la formule élémentaire contient exclusivement du carbone, de l'hydrogène et du fluor, ainsi que de l'oxygène dans le cas des éthers. Selon le brevet EP 0155423 on utilise des fluoroalkylamines primaires, secondaires ou tertiaires ne contenant pas plus de 6 atomes de carbone. Une autre famille importante de fluides de travail fluorés est constituée par les alcools fluorés primaires, secondaires ou tertiaires (brevet US 4455247).

Les meilleurs solvants, lorsque l'hydrocarbure fluoré comporte un ou plusieurs atomes d'hydrogène, sont ceux susceptibles de former des associations intermoléculaires par liaison hydrogène et se recrutent dans les classes de dérivés carbonyle (esters, cétones, amides, lactames), des alcools ou des éthers de polyoxyéthylèneglycols. Parmi les solvants les plus utilisés, on peut citer les éthers diméthyliques du tri- ou tétra-éthylèneglycol (brevet SU 150113 et demandes JP 79-152257 et DE 3202377), la N-méthyl-pyrrolidone (brevet SU 643524 et demandes JP 79-145774 et JP 82-132545), le N,N-diméthylformamide (demande JP 82-121759) et le phtalate de dibutyle (brevet SU 346326). Ont également été préconisés comme solvants, des imidazolines et des phosphoramides (demandes JP 82-132544 et DE 2944189) ainsi que des dérivés de l'alcool tétrahydrofurfurylique (brevet U.S. 4251382).

Dans le cas où l'on utilise un éther fluoré comme fluide de travail (brevet EP 0143509), le solvant est le tétraglyme ou, plus généralement, tout composé à caractère accepteur de proton.

L'emploi d'éthers fluorés comme fluides de travail est particulièrement intéressant puisque ces composés ne présentent aucun risque de toxicité et sont de ce fait déjà employés en anesthésie. En outre ces composés sont très solubles dans la plupart des solvants, surtout lorsqu'ils renferment un atome de chlore. En contrepartie, la présence de cet élément entraîne une moins bonne stabilité du couple fluide de travail-solvant en présence de métaux aux températures normalement atteintes dans le bouilleur des machines à absorption.

Il est en effet bien connu qu'un hydrocarbure chlorofluoré du type $C_nH_{2n+2-x-y}F_xCl_y$, chauffé en présence de fer, d'aluminium ou de cuivre et d'un composé donneur d'hydrogène, subit une transformation qui peut parfois être quantitative avec substitution des atomes de chlore par des atomes d'hydrogène pris au solvant. Ainsi, il a été montré dans le brevet FR 256739 que le chloro-1 trifluoro-2,2,2 éthane (R 133a) conduit dans ces conditions au trifluoroéthane (R 143a) selon le schéma réactionnel suivant :

$$CF_3\text{-}CH_2Cl + Fe \rightarrow CF_3\text{-}CH_2^{\bullet} + FeCl^{\bullet}$$

$$CF_3\text{-}CH_2^{\bullet} + R\text{-}H \text{ (solvant)} \rightarrow CF_3\text{-}CH_3 + R.$$

Dans le cas des hydrocarbures chlorofluorés renfermant au moins 2 atomes de carbone, on observe également la formation d'une oléfine :

$$CF_3\text{-}CH_2^{\bullet} + FeCl^{\bullet} \rightarrow CF_2 = CH_2 + FeClF$$

Dans le cas des éthers chlorofluorés, cette instabilité est amplifiée par la présence de la fonction éther. Ainsi, le méthoxy-1 trifluoro-1,1,2 chloro-2 éthane ($CH_3$-O-$CF_2$-CHFCl) est entièrement décomposé au bout de 100 heures à 180°C quel que soit le solvant mis en oeuvre. Il en est de même pour le difluorométhoxy-1 chloro-1 trifluoro-2,2,2 éthane (Isoflurane : $CF_2$H-O-CHCl-$CF_3$), les principaux produits de décomposition résultant du transfert de l'atome de chlore sur des fragments de molécules du solvant : $CH_3Cl$, $C_4H_9Cl$, etc...

Il a maintenant été trouvé que le difluorométhoxy-1 trifluoro-1,1,2 chloro-2 éthane (Enflurane : $CF_2$H-O-$CF_2$-CHFCl) présente dans les mêmes conditions une bonne stabilité lorsqu'il est associé à un solvant choisi parmi les esters aromatiques et les polyoxyéthylèneglycols ω,ω'-dialkylés. Cette stabilité est d'autant plus surprenante qu'avec d'autres solvants l'Enflurane donne lieu, suivant la réaction décrite ci-dessus pour les hydrocarbures chlorofluorés, à une déchloration :

$$CF_2H\text{-}O\text{-}CF_2\text{-}CHFCl \rightarrow CF_2H\text{-}O\text{-}CF_2\text{-}CH_2F$$

L'invention a donc pour objet des compositions comprenant un éther chlorofluoré et au moins un solvant, utilisables par exemple dans les machines de chauffage ou de refroidissement par absorption, caractérisées en ce que l'éther chlorofluoré est le difluorométhoxy-1 trifluoro-1,1,2 chloro-2 éthane et que le solvant est choisi parmi les esters aromatiques et les polyoxyéthylèneglycols ω,ω'-dialkylés de formules (I) et (II) ci-dessous.

Des esters aromatiques conformes à la présente invention sont notamment les mono- et diesters benzéniques de formule :

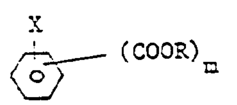 . (I)

dans laquelle X désigne un atome d'hydrogène ou un radical méthyle, m est égal à 1 ou 2 et R représente un radical alkyle, linéaire ou ramifié, contenant de 1 à 8 atomes de carbone.

Comme exemples de tels esters, on peut citer plus particulièrement le benzoate de méthyle (Eb : 199°C) ou d'éthyle(213°C), le méthyl-2 benzoate de méthyle (Eb : 215°C) ou d'éthyle (Eb : 227°C), ainsi que les diesters de l'acide o-phtalique tels que, par exemple, le phtalate de diméthyle (Eb : 282°C), de diéthyle (Eb : 299°C), de dipropyle (Eb : 317°C), de dibutyle (Eb : 340°C) ou de di(éthyl-2 hexyle) (Eb : 384°C).

Les polyoxyéthylèneglycols ω,ω'-dialkylés conformes à la présente invention peuvent être représentés par la formule :

$$R_1\text{-}(OCH_2CH_2)_n\text{-}OR_2 \quad \text{(II)}$$

dans laquelle n est un nombre entier allant de 1 à 4 et les symboles $R_1$ et $R_2$, identiques ou différents, représentent chacun un radical alkyle, linéaire ou ramifié, contenant de 1 à 8 atomes de carbone.

Comme exemples de tels solvants, on peut citer plus particulièrement les éthers diméthyliques du diéthylèneglycol : $CH_3O$-$(C_2H_4O)_2$-$CH_3$ (Eb : 160°C) ou du tétraéthylèneglycol : $CH_3O$-$(C_2$-$H_4O)_4$-$CH_3$ (Eb : 276°C), l'éther diéthylique du diéthylèneglycol : $C_2H_5O$-$(C_2H_4O)_2$-$C_2H_5$ (Eb : 189°C) et l'éther dibutylique du diéthylèneglycol : $C_4H_9O$-$(C_2H_4O)_2$-$C_4H_9$ (Eb : 256°C).

Les compositions selon l'invention présentent un domaine étendu de miscibilité complète. Les proportions respectives de difluorométhoxy-1 trifluoro-1,1,2 chloro-2 éthane et de solvant sont déterminées, de façon connue, en fonction des conditions de fonctionnement du cycle d'absorption. Avantageusement, on utilise un pourcentage molaire de 5 à 80% en fluide de travail dans le mélange total.

Les essais suivants A à D, non conformes à la présente invention, sont donnés à titre de témoins et sont à comparer aux exemples 1 à 4 qui illustrent l'invention sans la limiter.

ESSAI A

5 mmoles (742,5 mg) de méthoxy-1 trifluoro-1,1,2 chloro-2 éthane ($CH_3$-O-$CF_2$-CHFCl) sont introduites dans un tube pyrex à paroi épaisse renfermant 3 g de N-méthylpyrrolidone et une éprouvette métallique de 250 mg d'acier ordinaire convenablement nettoyé. Le tube est refroidi à la température de l'azote liquide, scellé sous vide et maintenu ensuite à une température de 180°C durant 100 heures. Il est ensuite à nouveau replongé dans l'azote liquide, relié à une rampe à vide et ouvert à l'aide d'un dispositif approprié. Les produits volatils sont récupérés par piégeage à basse température et la quantité de calogène restant dans la phase liquide est dosée par chromatographie en phase gazeuse selon la méthode de l'étalonnage interne. L'analyse montre que 97% de l'éther chlorofluoré initialement introduit ont disparu.

ESSAI B

On répète l'essai A, mais en remplaçant la N-méthyl-pyrrolidone par 3 g d'éther diméthylique du diéthylèneglycol. Après ouverture du tube, on constate que la totalité de l'éther chlorofluoré a été transformée. Les principaux produits de transformation, identifiés par chromatographie en phase gazeuse, sont le dioxanne et le diméthyléther.

ESSAI C

On opère comme à l'essai A avec 5 mmoles (922,5 mg) de difluorométhoxy-1 trifluoro-2,2,2 chloro-1 éthane (isoflurane : $CF_2$H-O-CHCl-$CF_3$), 3 g d'éther diméthylique du tétraéthylèneglycol et 250 mg d'une éprouvette d'acier ordinaire. Après chauffage à 180°C durant 100 heures et ouverture du tube, on constate que 96% de l'éther chlorofluoré ont disparu ; les principaux produits de transformation, identifiés par chromatographie, sont le dioxanne, le diméthyléther et le chlorure de méthyle.

ESSAI D

On répète, l'essai A, mais en remplaçant le méthoxy-1 trifluoro-1,1,2 chloro-2 éthane par 5 mmoles (922,5 mg) de difluorométhoxy-1 trifluoro-1,1,2 chloro-2 éthane et en utilisant une éprouvette métallique de 292 mg.

Le taux de décomposition de l'éther chlorofluoré est de 63%, le produit formé étant essentiellement l'éther $CF_2$H-O-$CF_2$-$CH_2$F.

EXEMPLE 1

Un mélange de 5 mmoles (922,5 mg) de difluorométhoxy-1 trifluoro-1,1,2 chloro-2 éthane (Enflurane) et 3 g de benzoate de méthyle est placé dans un tube en pyrex à paroi épaisse en présence d'une éprouvette métallique de 250 mg en acier ordinaire. Après avoir maintenu le tout à 180°C pendant 100 heures, on ouvre le tube et analyse comme à l'essai A ; on trouve que seulement 0,9% de l'éther chlorofluoré ont été transformés (moyenne de deux essais).

EXEMPLE 2

On répète l'exemple 1, mais en portant la durée du test à 700 heures. Le taux de décomposition de l'éther chlorofluoré n'atteint que 5,8%.

EXEMPLE 3

On répète l'exemple 1, mais en remplaçant les 3 g de benzoate de méthyle par le même poids d'éther diméthylique du diéthylèneglycol. Le taux de décomposition de l'éther chlorofluoré atteint 4,7%.

EXEMPLE 4

On répète l'exemple 1, mais en remplaçant le benzoate de méthyle par 3 g d'éther diméthylique du tétraéthylèneglycol. Le taux de décomposition de l'éther chlorofluoré est de l'ordre de 4%.

## Revendications

1. Composition comprenant un éther chlorofluoré et au moins un solvant, caractérisée en ce que l'éther chlorofluoré est le difluorométhoxy-1 trifluoro-1,1,2 chloro-2 éthane et que le solvant est choisi parmi les esters aromatiques de formule :

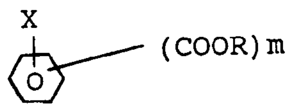

(I)

dans laquelle X désigne un atome d'hydrogène ou un radical méthyle, m est égal à 1 ou 2 et R représente un radical alkyle, linéaire ou ramifié, contenant de 1 à 8 atomes de carbone, et les polyoxyéthylèneglycols ω,ω'-dialkylés de formule :

$$R_1\text{-}(OCH_2CH_2)_n\text{-}OR_2 \quad (II)$$

dans laquelle n est un nombre entier allant de 1 à 4 et les symboles $R_1$ et $R_2$, identiques ou différents, représentent chacun un radical alkyle, linéaire ou ramifié, contenant de 1 à 8 atomes de carbone.

2. Composition selon la revendication 1, dans laquelle l'ester aromatique de formule est le benzoate de méthyle.

3. Composition selon la revendication 1, dans laquelle le polyoxyéthylèneglycol ω,ω'-dialkylé est l'éther diméthylique du diéthylèneglycol ou du tétraéthylèneglycol.

## Patentansprüche

1. Zusammensetzung, umfassend einen chlorfluorierten Ether und mindestens ein Lösungsmittel, dadurch gekennzeichnet, daß der chlorfluorierte Ether ein 1-Difluormethoxy-1,1,2-trifluor-2-chlorethan ist und daß das Lösungsmittel ausgewählt ist aus aromatischen Estern der Formel :

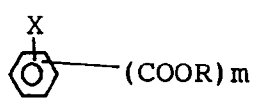

(I)

in der X ein Wasserstoffatom oder ein Methylrest bedeutet, m gleich 1 oder 2 ist und R einen geradkettigen oder verzweigten Alkylrest bedeutet, der 1 bis 8 Kohlenstoffatome enthält und aus ω,ω'-dialkylierten Polyoxyethylenglycolen der Formel :

$$R_1\text{-}(OCH_2CH_2)_n\text{-}OR_2 \quad (II)$$

in der n eine ganze Zahl von 1 bis 4 ist und die Symbole $R_1$ und $R_2$, gleich oder verschieden, jeweils einen geradkettigen oder verzweigten Alkylrest bedeuten, der 1 bis 8 Kohlenstoffatome enthält.

2. Zusammensetzung nach Anspruch 1, in der der aromatische Ester ein Methylbenzoat ist.

3. Zusammensetzung nach Anspruch 1, in der das ω,ω'-dialkylierte Polyoxyethylenglycol der Dimethylether von Diethylenglycol oder von Tetraethylenglycol ist.

## Claims

1. Composition comprising a chlorofluoro ether and at least one solvent, characterised in that the chlorofluoro ether is 1-difluoromethoxy-1,1,2-trifluoro-2-chloroethane and that the solvent is chosen from aromatic esters of formula :

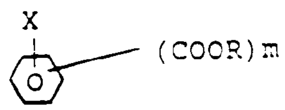

(I)

in which X denotes a hydrogen atom or a methyl radical, m is equal to 1 or 2 and R denotes a linear or branched alkyl radical containing from 1 to 8 carbon atoms and ω,ω'-dialkylated polyoxyethylene glycols of formula :

$$R_1\text{-}(OCH_2CH_2)_n\text{-}OR_2 \quad (II)$$

in which n is an integer ranging from 1 to 4 and each of the symbols $R_1$ and $R_2$, which are identical or different, denotes a linear or branched alkyl radical containing from 1 to 8 carbon atoms.

2. Composition according to Claim 1, in which the aromatic ester is methyl benzoate.

3. Composition according to Claim 1, in which the ω,ω'-dialkylated polyoxyethylene glycol is diethylene glycol dimethyl ether or tetraethylene glycol dimethyl ether.